# EUROPÄISCHE PATENTSCHRIFT

(11) **EP 0 367 027 B1**
(45) Veröffentlichungstag und Bekanntmachung des Hinweises auf die Patenterteilung: **22.12.1993**
(21) Anmeldenummer: 89119369.0
(22) Anmeldetag: 19.10.1989
(51) Int. Cl.: A01D 34/68

(54) **Rasenmähergehäuse**
Lawn mower housing
Caisse pour tondeuse à gazon

(30) Priorität: 31.10.1988 US 264414
(43) Veröffentlichungstag der Anmeldung: 09.05.1990
(73) Patentinhaber: DEERE & COMPANY, Moline, Illinois 61265 (US)
(72) Erfinder: Cerny, John Robert, Jr., Bettendorf Iowa 52722 (US); Olson, Jay Harold, Moline Illinois 61265 (US); Hall, James William, Bettendorf Iowa 52722 (US); Erdman, Leon Paul, Beaver Dam Wisconsin 53916 (US); Rohren, Ronald Edward, Moline Illinois 61265 (US)
(74) Vertreter: Feldmann, Bernhard

(56) Entgegenhaltungen:
- DE-A- 2 519 842
- DE-A- 2 809 654
- US-A- 3 263 406
- US-A- 4 724 660

## Beschreibung

Die Erfindung bezieht sich auf ein Rasenmähergehäuse für mehrere um vertikale und antreibbare Messerwellen umlaufende Sichelmesser mit einem bodenwärts offenen, einstückigen und aus Kunststoff oder Leichtmetall hergestellten Messergehäuse, das in einem zentralen Abschnitt mindestens einen Kuppelteil aufweist und von diesem zentralen Abschnitt in einen sich nach außen erstreckenden Deckelteil mit einer Schutzummantelung übergeht, und mit einem Unterteil, der mit dem Deckelteil des Messergehäuses im Bereich der Peripherie des zentralen Abschnittes lösbar verbindbar ist und Durchgangsöffnungen für die Messerwellen aufweist, wobei zwischen dem Unterteil und dem Kuppelteil Antriebsmittel für die Sichelmesser vorgesehen sind.

Bei diesem bekannten Rasenmähergehäuse (US-A-4 724 660) sind die Antriebsmittel so angeordnet, daß sie vor Staub, Schmutz und anderen die Betriebsfähigkeit eventuell beeinträchtigenden Verunreinigungen geschützt sind. Allerdings ist bei dem bekannten Rasenmähergehäuse der Unterteil wannenmäßig ausgebildet, und die die Antriebsmittel aufnehmenden Wellen sind in der Schutzummantelung und in dem Unterteil gelagert. Hinzu kommt, daß die Schutzummantelung über Längs- und Querstreben ausgesteift ist, so daß ein relativ schweres Rasenmähergehäuse vorliegt, in das die Antriebsmittel bzw. deren Wellen nur mit erheblichem Aufwand eingebaut werden können. Andererseits sind aus Kunststoff gebildete Schutzummantelungen nicht mehr neu (DE-A1-2 519 842).

In dem Dokument US-A-3 263 406 ist ein etwa rechteckiges und nach unten hin offenes Messergehäuse mit umlaufenden Seitenwänden offenbart, auf dessen Oberseite, durch die Messerwellen durchtreten, Antriebsmittel für drei Sichelmesser vorgesehen sind. Die Antriebsmittel sind durch eine Haube abgedeckt, die mit dem Messergehäuse verschraubt ist.

Die mit der Erfindung zu lösende Aufgabe wird darin gesehen, bei Zweiteiligen Rasenmähergehäusen die Antriebsmittel einfacher einbauen zu können und die Voraussetzungen dafür zu schaffen, daß das gesamte Gehäuse relativ leicht ausgebildet werden kann.

Diese Aufgabe ist nach der Erfindung dadurch gelöst worden, daß der gesamte zentrale Abschnitt des Messergehäuses als einziger Kuppelteil mit ebener Oberseite und der Unterteil als flache und steife Tragplatte ausgebildet ist, auf der die Antriebsmittel ausschließlich montiert sind und an der Befestigungsbügel zum Anschließen des Rasenmähergehäuses befestigt sind. Auf diese Weise sind die Antriebsmittel im eingebauten Zustand nach wie vor gegen Verunreinigungen geschützt, jedoch leicht einbbaubar, da sie nur mit dem Unterteil verbunden werden, d. h. der Unterteil nimmt alle Antriebsmittel auf und kann dann mit den auf ihn montierten Antriebsmitteln mit der Schutzummantelung verbunden, beispielsweise verschraubt werden. Die Schutzummantelung braucht nicht mit irgendwelchen Aufnahmestellen, beispielsweise Lagerstellen für die Wellen der Antriebsmittel, versehen zu werden und kann damit in Leichtbauweise hergestellt sein. Werden die sich zwischen dem Unterteil und der Schutzummantelung in dem Hohlraum befindlichen Antriebsmittel über einen Motor angetrieben, so kann dieser auf die Schutzummantelung aufgesetzt werden, wozu nur eine Welle der Antriebsmittel durch die Schutzummantelung nach oben herausgeführt zu werden braucht. Ist das Rasenmähergehäuse an einen selbstfahrenden Kleinschlepper angeschlossen, dann bietet es sich an, auf das Ende der durch die Schutzummantelung nach oben geführten Welle eine Riemenscheibe aufzusetzen und den Hauptantrieb von dem Kleinschlepper abzuleiten.

Dadurch, daß der Unterteil als steife Tragplatte ausgebildet ist, beispielsweise in Form einer Eisen- oder auch Gußplatte, wird erreicht, daß die Schutzummantelung über die Tragplatte ausgesteift wird und die Schutzummantelung selbst wiederum sehr leicht ausgebildet werden kann. Ein kompliziert herzustellendes wannenförmiges Unterteil ist nicht mehr erforderlich, und die Antriebsmittel können sehr einfach mit der Platte verbunden werden.

Zweckmäßig können zur Verbindung des Unterteils mit der Schutzummantelung in den Deckelteil einsetzbare, mit Innengewinde versehene Einsätze dienen, in die durch Bohrungen im Unterteil geführte Schrauben einschraubbar sind. Die Einsätze, die vorzugsweise T-förmig auszubilden sind, können in die Schutzummantelung eingegossen werden und versteifen an diesen Stellen die Schutzummantelung, so daß sich unverformbare Verbindungsstellen für die Tragplatte ergeben.

Ist der als Tragplatte ausgebildete Unterteil nicht aus verwindungssteifem Metall oder Gußeisen hergestellt, so kann er, falls erforderlich, noch über Rippen ausgesteift werden.

Vorteilhaft können nach der Erfindung auch noch zwischen der Schutzummantelung bzw. dem Deckelteil und dem als Tragplatte ausgebildeten Unterteil geräuschreduzierende Mittel vorgesehen sein, so daß Klappergeräusche weitgehend vermieden werden.

Auch bei dem gattungsmäßig berücksichtigten Dokument sind die Antriebsmittel mit einer oder mehreren Messerwellen verbunden, die durch in dem Unterteil vorgesehene Öffnungen geführt und gelagert werden. Nach der Erfindung jedoch wird vorgeschlagen, daß diese Messerwellen in Spindelgehäusen gelagert sind, die mit dem Unterteil verschraubbar sind.

Dies wiederum ermöglicht eine besonders einfache Anordnung der Messerwellen, insbesondere dann, wenn die Einheit aus Messerwelle, Spindelgehäuse und Sichelmesser von unten an die Tragpatte geschraubt wird. Dann ragt nämlich ein Teil der Messerwelle nach oben über die Tragplatte hinaus und kann dort in einfacher Weise beispielsweise mit einer Riemenscheibe verbunden werden, die zu den Antriebsmitteln gehört, da diese in Form eines Riementriebes ausgebildet sein können, wenn mehrere Sichelmesser vorhanden sind. Werden bei zwei Sichelmessern diese noch gegenläufig angetrieben, so bietet die vorzugsweise ebene Tragplatte noch genügend Platz, auch noch eine als Umkehrrolle ausgebildete Riemenspannscheibe vorzusehen.

In der Zeichnung ist ein nachfolgend näher erläutertes Ausführungsbeispiel der Erfindung dargestellt. Es zeigt:
- Fig. 1: ein Rasenmähergehäuse in auseinandergezogener Darstellung,
- Fig. 2: einen Schnitt durch das zusammengebaute Rasenmähergehäuse nach Fig. 1,
- Fig. 3: einen Schnitt nach der Linie 3-3 in Fig. 2,
- Fig. 4: einen Schnitt nach der Linie 4-4 in Fig. 2 und
- Fig. 5: einen mit einem Sichelmesser verbundenen Elektromotor zum Antrieb aller Sichelmesser.

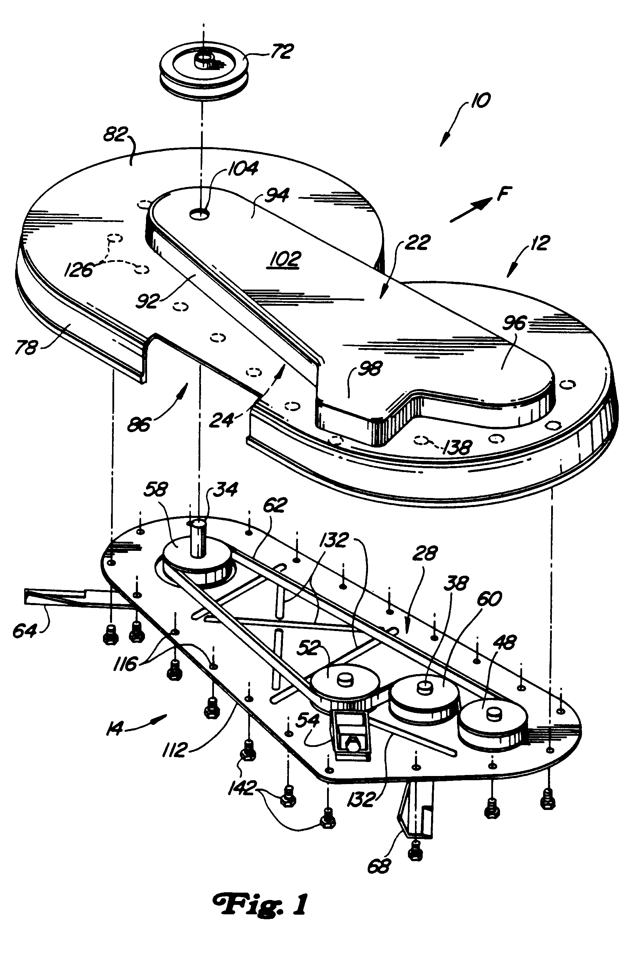

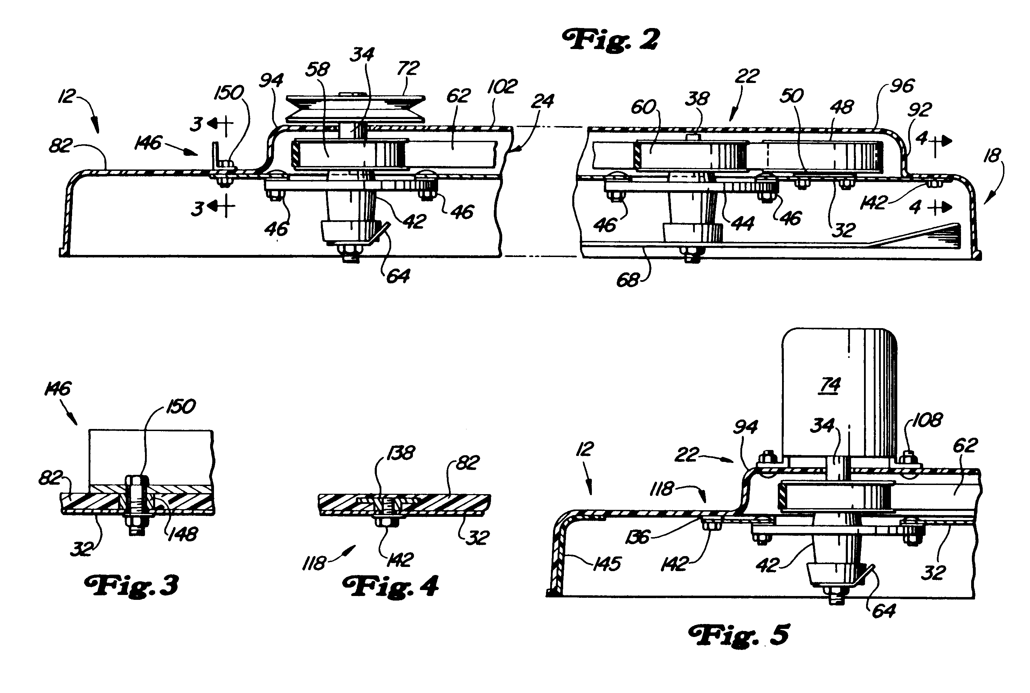

In Fig. 1 der Zeichnung ist ein Rasenmähergehäuse 10 in auseinandergezogener Darstellung für einen Sichelmäher wiedergegeben. Das Rasenmähergehäuse 10 ist zweiteilig ausgebildet und weist unter anderem eine obere Schutzummantelung 12 und eine Antriebseinheit 14 auf. Die Schutzummantelung 12 ist in Leichtbauweise hergestellt und besteht aus einem Messergehäuse 18 (Fig. 2) und einem oberen Kuppelteil 22, der einen nach unten hin offenen Hohlraum 24 bildet.

Die Antriebseinheit 14 ist mit Antriebsmitteln 28 versehen, die auf der Oberseite eines Unterteils 32 in Form einer Tragplatte vorgesehen sind. Bei den in Fig. 1 dargestellten Antriebsmitteln 28 sind eine erste und eine zweite mit gegenseitigem Abstand zueinander angeordnete Messerwelle 34 und 38 zu erkennen, die um vertikale Achsen umlaufen und damit senkrecht zu der Ebene der Tragplatte 32 in Spindelgehäusen 42 und 44 angeordnet sind (Fig. 2). Die Spindelgehäuse 42 und 44 selbst sind über Schrauben 46 an der Unterseite der Tragplatte 32 befestigt. Des weiteren ist auf der Oberseite der Tragplatte 32 mit Bezug auf Fig. 2 rechts neben der Messerwelle 38 eine Riemenscheibe 48 über eine Konsole 50 derart angeordnet, daß sie ebenfalls um eine senkrechte Achse umläuft und einen Treibriemen 62 umlenkt. Eine einstellbare Riemenspannscheibe 52 ist über einen Träger 54 links neben der Messerwelle 38 auf der Tragplatte 32 ebenfalls um eine lotrechte Achse umlaufend angeordnet, und eine Riemenscheibe 58 sitzt auf der Messerwelle 34 drehfest auf, so daß sie den Treibriemen 62 an der linken Seite der Tragplatte 32 umlenken kann. Der Treibriemen 62 ist weiter um die Riemenspannrolle 52 und die Rückseite einer Riemenscheibe 60, die mit der Messerwelle 38 drehfest verbunden ist, bis zur Riemenscheibe 48 und zurück zur Riemenscheibe 58 geführt. Der Treibriemen ist damit endlos und treibt die Messerwellen 34 und 38 in entgegengesetzten Drehrichtungen an.

Die Messerwellen 34 und 38 sind durch die Tragplatte 32 nach unten geführt und nehmen an ihren unteren Enden je ein Sichelmesser 64 und 68 auf, die somit ebenfalls in entgegengesetzten Drehrichtungen umlaufen. Vorzugsweise sind die Sichelmesser 64 und 68 auf ihren Messerwellen 34 und 38 derart angeordnet, daß sie um 90° phasenverschoben umlaufen. Der Antrieb für die Antriebsmittel 28 kann dabei von einer Antriebsscheibe 72, die mit dem oberen Ende der Messerwelle 34 drehfest verbindbar ist und über einen nicht dargestellten Riemen von einem das Rasenmähergehäuse aufnehmenden Kleinschlepper aus angetrieben werden kann, oder von einem Motor 74 (Fig. 5) aus erfolgen, der mit der Schutzummantelung verbunden ist und die Messerwelle 34 antreibt.

Wie am besten aus der Fig. 1 zu ersehen ist, werden die Antriebsmittel 28 vollständig von der Tragplatte 32 aufgenommen bzw. sind auf dieser montiert. Die Antriebsmittel 28 sind dabei derart zueinander gruppiert, daß sie in dem sich nach unten öffnenden Hohlraum 24 des Kuppelteils 22 Platz finden, wenn die Tragplatte 32 mit der Unterseite der Schutzummantelung verschraubt ist.

Das Messergehäuse 18 ist mit einer äußeren gebogenen Außenfläche 78 versehen, die sich nach oben zu einem horizontal verlaufenden Deckelteil 82 erstreckt, der sich seinerseits von der Außenfläche 78 nach innen bis zu der Unterkante des Kuppelteils 22 erstreckt. Die Außenfläche 78 ist derart unterbrochen, daß sie eine rückwärtige Austrittsöffnung 86 etwa in der Mitte des Rasenmähergehäuses 10 bildet. Die Austrittsöffnung 86 ist dabei rechteckig ausgebildet und erstreckt sich von dem Deckelteil 82 bis zur Unterkante des Messergehäuses 18. Die gegenläufigen Sichelmesser 64 und 68 können damit das abgeschnittene Gut direkt durch die Austrittsöffnung 86 fördern.

Was den Kuppelteil 22 anbelangt, so ist er mit einer vertikal verlaufenden Außenfläche 92 ausgerüstet, die in etwa den Außenabmessungen bzw. dem Umriß der Antriebsmittel 28 entspricht. Er weist eine Antriebsseite 94 auf, die den Bereich um die Riemenscheibe 58 abdeckt, sowie eine Abtriebsseite 96, die den Bereich um die Riemenscheibe 48 und den der Riemenscheibe 60 abdeckt. Ein sich rückwärtig erstreckender Abzweig 98 deckt den Bereich um die Riemenspannscheibe 52 ab. Über einen horizontal verlaufenden Dekkelteil 102 ist der Kuppelteil 22 nach oben verschlossen. Der ansonsten verschlossene Deckelteil 102 weist jedoch noch eine Bohrung 104 auf, durch die das Ende der Messerwelle 34 durchtritt, damit dort die Antriebsscheibe 72 bzw. der Motor 74 angeschlossen werden können.

Damit erstreckt sich der Kuppelteil 22 über einen nicht unwesentlichen Bereich des tiefer gelegenen Deckelteils 82 und verleiht der Schutzummantelung 12 eine zusätzliche Stabilität, so daß auch, falls es erwünscht ist, der Motor 74, vorzugsweise dann ein Elektromotor, an der Antriebsseite 94 auf dem oberen Deckelteil 102 angebracht werden kann. Die Befestigung eines solchen Motors 74 kann über Schrauben 108 erfolgen.

Das Rasenmähergehäuse 10 wird in einfacher Weise dadurch zusammengebaut, daß die Antriebseinheit 14 in die Schutzummantelung 12 gehoben wird, wobei die Antriebsmittel 28 von dem Hohlraum 24 in dem Kuppelteil 22 aufgenommen werden. Die Tragplatte 32 weist einen etwas größeren Umriß (Rand 112) als der Kuppelteil 32 auf, jedoch eine ähnliche Konfiguration. Die Antriebseinheit 14 kann so weit angehoben werden, bis die Tragplatte 32 mit ihrer Oberseite gegen die Unterseite des unteren Deckelteils 82 zur Anlage kommt. Die Tragplatte 32 ist im Bereich ihres Randes 112 mit einer Vielzahl von Bohrungen 116 zur Aufnahme von Befestigungsmitteln 118 versehen, die an Stellen 126, die außen von der Außenfläche 92 in dem unteren Deckelteil 82 liegen, angreifen.

Die Tragplatte 32 ist vorzugsweise aus Stahl hergestellt und kann mit Rippen 132 versehen werden, insbesondere dann, wenn sie aus einem anderen Werkstoff hergestellt ist und noch versteift werden muß. In jedem Fall ist dafür Sorge zu tragen, daß der Unterteil bzw. die Tragplatte 32 so auszubilden ist, daß die von den Sichelmessern 64 und 68 herrührenden Kräfte leicht und ohne Deformation der Tragplatte 32 aufgefangen werden können. Sollte während des Einsatzes eines der Sichelmesser auf ein Hindernis, wie einen Stein, treffen, so werden die dann ausgelösten Momente sicher von der Tragplatte 32 aufgenommen und nicht in die Schutzummantelung weitergelangen. Daher kann die Schutzummantelung 12 aus Kunststoff oder ähnlichem leichten Werkstoff hergestellt, insbesondere gegossen werden und somit in einfacher Weise einstückig ausgebildet sein. Ein aus Kunststoff bestehendes Distanzstück 136 (Fig. 5) kann zwischen die Tragplatte 32 und die Unterseite des unteren Deckelteils 82 gelegt werden, um die Antriebsmittel 28 gegen die Schutzummantelung zu isolieren und um so Geräusche zu absorbieren. Das Distanzstück 136 kann auch Ermüdungserscheinungen reduzieren, die beim Zusammenbau von Stahl und Kunststoff wegen der unterschiedlichen physikalischen Eigenschaften auftreten können. Alternativ kann die Schutzummantelung 12 auch aus einer Verbindung bestehen, die eine Kunststoffschale mit einer Gummiauskleidung aufweist, um einem Verschleiß entgegenzuwirken und um Geräusche und Vibrationen zu verringern. Vorzugsweise wird die Schutzummantelung gegossen oder gepreßt und einstückig ausgebildet, um die Herstellungskosten zu reduzieren. Ist das Material der Schutzummantelung sehr dünnwandig, können gegebenenfalls die Seitenteile verstärkt werden.

Aus Fig. 4 ist zu entnehmen, daß die Befestigungsmittel 118 T-förmig ausgebildete und mit Innengewinde versehene Einsätze 138 aufweisen, die an den Stellen 126 in den unteren Deckelteil eingegossen werden. Die Einsätze 138 sind nach unten hin offen, und Schrauben 142, die durch die Bohrungen 116 geführt sind, können in die Einsätze eingeschraubt werden. Sobald die Tragplatte 32 mit dem unteren Deckelteil 82 der Schutzummantelung verschraubt ist, ist auch der Hohlraum 24 des Kuppelteils 22 gegen Schmutz und andere Verunreinigungen abgedichtet, die beim Mähvorgang leicht auftreten können. Damit sind die Antriebsmittel 28 gegen Schmutz etc. geschützt, der die Antriebsmittel verstopfen und eine Betriebsstörung hervorrufen könnte. Die Außenflächen 78 und 92 tragen zu einer ausreichenden Stabilität der Schutzummantelung bei. Auskleidungen 145 können noch zusätzlich im Bereich der Seitenwände des Messergehäuses vorgesehen werden, um einem möglichen Verschleiß entgegenzuwirken. Sie können mechanisch befestigt oder geklebt werden. Andererseits kann auch eine Schicht Hochtemperaturnylon mit dem Messergehäuse 18 vergossen werden. Das Gießen oder Pressen der Schutzummantelung ergibt ein ästhetisch ansprechendes Design mit glatten und übersichtlichen Übergängen.

Um das Rasenmähergehäuse 10 an ein Fahrzeug anschließen zu können, sind in den Fig. 2 und 3 erkennbare Befestigungsbügel 146 mechanisch mit der Tragplatte 32 verbunden. Im einzelnen sind hierzu in die Schutzummantelung 12 bzw. in den unteren Deckelteil 82 Distanzhülsen 148 eingesetzt, deren Länge dem Abstand zwischen dem jeweiligen Befestigungsbügel 146 und der Tragplatte 32 entspricht und die somit den durchzusteckenden Schrauben 150 einen sicheren Halt geben. Die Befestigungsbügel 146 werden damit mit der Tragplatte unmittelbar verspannt, und eine weitere Verstärkung der Schutzummantelung ist nicht erforderlich.

Aus der Fig. 5 ist noch zu erkennen, daß der Motor 74 mit dem oberen Deckelteil 102 an der Antriebsseite 94 des Kuppelteils 22 verschraubt ist. Die Messerwelle 34 erstreckt sich dazu durch die Bohrung 104, die ihrerseits durch das Motorgehäuse im wesentlichen abgedichtet wird.

## Patentansprüche

1. Rasenmähergehäuse für mehrere um vertikale und antreibbare Messerwellen (34, 38) umlaufende Sichelmesser (64, 68) mit einem bodenwärts offenen, einstückigen und aus Kunststoff oder Leichtmetall hergestellten Messergehäuse (18), das in einem zentralen Abschnitt mindestens einen Kuppelteil (22) aufweist und von diesem zentralen Abschnitt in einen sich nach außen erstreckenden Deckelteil (82) mit einer Schutzummantelung (12) übergeht, und mit einem Unterteil (32), der mit dem Deckelteil (82) des Messergehäuses (18) im Bereich der Peripherie des zentralen Abschnittes lösbar verbindbar ist und Durchgangsöffnungen für die Messerwellen (34, 38) aufweist, wobei zwischen dem Unterteil (32) und dem Kuppelteil (22) Antriebsmittel (28) für die Sichelmesser (64, 68) vorgesehen sind, dadurch gekennzeichnet, daß der gesamte zentrale Abschnitt des Messergehäuses (18) als einziger Kuppelteil (22) mit ebener Oberseite und der Unterteil (32) als flache und steife Tragplatte ausgebildet ist, auf der die Antriebsmittel (28) ausschließlich montiert sind und an der Befestigungsbügel (146) zum Anschließen des Rasenmähergehäuses befestigt sind.

2. Rasenmähergehäuse nach Anspruch 1 dadurch gekennzeichnet, daß zur Verbindung des Unterteils (32) mit der Schutzummantelung (12) in den Deckelteil (82) einsetzbare, mit Innengewinde versehene Einsätze (138) dienen, in die durch Bohrungen (116) im Unterteil (32) geführte Schrauben (142) einschraubbar sind.

3. Rasenmähergehäuse nach Anspruch 1 oder 2, dadurch gekennzeichnet, daß der als Tragplatte ausgebildete Unterteil (32) über Rippen (132) versteift ist.

4. Rasenmähergehäuse nach einem oder mehreren der vorherigen Ansprüche, dadurch gekennzeichnet, daß zwischen der Schutzummantelung (12) bzw. dem Deckelteil (82) und dem als Tragplatte ausgebildeten Unterteil (32) geräuschreduzierende Mittel vorgesehen sind.

5. Rasenmähergehäuse nach einem oder mehreren der vorherigen Ansprüche, dadurch gekennzeichnet, daß die Antriebsmittel (28) mit einer oder mehreren Messerwellen (34, 38) verbunden sind, die durch in dem Unterteil (32) vorgesehene Öffnungen geführt und in Spindelgehäusen (42) gelagert sind, die mit dem Unterteil (32) verschraubt sind.

## Claims

1. A lawn mower housing for a plurality of sickle cutters (64, 68) rotating on vertical and drivable cutter shafts (34, 38), with a cutter housing (18) open towards the ground and made in one piece of plastics material or light metal, the housing comprising at least one dome part (22) in a central section and merging from this central section into an outwardly extending cover part (82) with a protective casing (12), and with an under part (32) which is releasably connectable to the cover part (82) of the cutter housing (18) in the region of the periphery of the central section and has through openings for the cutter shafts (34, 38), wherein drive means (28) for the sickle cutters (64, 68) are provided between the under part (32) and the dome part (22), characterized in that the whole central section of the cutter housing (18) is formed as a single dome part (22) with a flat upper side and the under part (32) is formed as a flat and stiff support plate, on which the drive means (28) are exclusively mounted and to which attachment brackets (146) for attachment of the lawn mower housing are fixed.

2. A lawn mower housing according to claim 1, characterized in that inserts (138) provided with female threads and insertable into the cover part (82) serve for connection of the under part (32) to the protective casing (12), and into which screws (142) can be screwed through holes (116) in the under part (32).

3. A lawn mower housing according to claim 1 or 2, characterized in that the under part (32) formed as a support plate is stiffened by ribs (132).

4. A lawn mower housing according to one or more of the preceding claims, characterized in that noise-reducing means are provided between the protective casing (12) or the cover part (82) and the under part (32) forming a support plate.

5. A lawn mower housing according to one or more of the preceding claims, characterized in that the drive means (28) are connected to one or to a plurality of cutter shafts (34, 38), which are passed through openings in the under part (32) and are journalled in spindle housings (42) screwed to the under part (32).

## Revendications

1. Carter de tondeuse à gazon pour plusieurs lames de fauchage (64, 68) tournant autour d'arbres porte-lame verticaux (34, 38) pouvant être entraînés, avec un carter de lames (18) ouvert vers le bas, réalisé en une pièce en matière plastique ou en métal léger, qui présente au moins une partie de dôme (22) dans une région centrale et dont ladite région centrale se raccorde à une partie de couvercle (82), s'étendant vers l'extérieur et pourvue d'une enveloppe protectrice (12), et avec une partie inférieure (32), qui peut être assemblée de manière détachable à la partie de couvercle (82) du carter de lames (18) dans la périphérie de la région centrale et qui présente des ouvertures de passage pour les arbres porte-lame (34, 38), des moyens d'entraînement (28) pour les lames de fauchage (64, 68) étant prévus entre la partie inférieure (32) et la partie de dôme (22), **caractérisé** en ce que l'ensemble de la région centrale du carter de lames (18) est réalisée sous la forme d'une unique partie de dôme (22) à face supérieure plane et la partie inférieure (32) est conçue comme plaque porteuse plate et rigide, sur laquelle seule sont montés les moyens d'entraînement (28), et sur laquelle sont fixés des étriers de fixation (146) pour le raccordement du carter de tondeuse à gazon.

2. Carter de tondeuse à gazon selon la revendication 1, **caractérisé** en ce que, pour assembler la partie inférieure (32) à l'enveloppe protectrice (12), on utilise des éléments rapportés (138) à filetage intérieur, qui peuvent être insérés dans la partie de couvercle (82) et dans lesquels peuvent être vissés des boulons (142) traversant des perçages (116) dans la partie inférieure (32).

3. Carter de tondeuse à gazon selon la revendication 1 ou 2, **caractérisé** en ce que la partie inférieure (32) conçue comme plaque porteuse est renforcée par des nervures (132).

4. Carter de tondeuse à gazon selon l'une ou plusieurs quelconques des revendications précédentes, **caractérisé** en ce que des moyens réducteurs de bruit sont prévus entre l'enveloppe protectrice (12) ou la partie de couvercle (82) et la partie inférieure (32) conçue comme plaque porteuse.

5. Carter de tondeuse à gazon selon l'une ou plusieurs quelconques des revendications précédentes, **caractérisé** en ce que les moyens d'entraînement (28) sont reliés à un ou plusieurs arbres porte-lame (34, 38), qui traversent des ouvertures prévues dans la partie inférieure (32) et sont logés dans des carters de broche (42) qui sont boulonnés à la partie inférieure (32).
